# EUROPEAN PATENT APPLICATION

(11) **EP 4 019 092 A1**
(43) Date of publication of application: **29.06.2022**
(21) Application number: 20461603.1
(22) Date of filing: 23.12.2020
(51) Int. Cl.: A62B 35/00, F16B 45/02

(54) **ANCHORAGE DEVICE**

(71) Applicant: CBR ROCK MASTER spólka z ograniczona odpowiedzialnoscia spólka komandytowa, 30-079 Kraków (PL)
(72) Inventor: Golkowski, Mariusz, 30-079 Kraków (PL); Biela, Tomasz, 43-340 Kozy (PL); Budnicki, Marek, 31-135 Kraków (PL)
(74) Representative: Górska, Anna

(57) **Abstract**

An anchoring device with a shape similar to a circle, characterised in that it comprises a handle (5) and an articulated assembly of a body (1) and a movable jaw (2) provided with teeth (9), the body (1) being provided with a lock (3) consisting of two interconnected shaped pieces (12', 12") and two tension members (13', 13") hingedly connected to the shaped pieces (12', 12") and to the body (1) by means of a bolt (14), the tension members (13', 13") being ended with a lock pin (10).

## Description

The object of the invention is an anchoring device, in particular intended for load-bearing towers.

Load-bearing towers are currently one of the main means of supporting the ceilings of buildings or viaducts during construction works, in particular when pouring concrete into the structure. The widespread use of the said towers and their solid metal structure provide preferable possibilities for using the towers as anchoring elements for construction workers. The load-bearing towers are characterised by a slender structure, and the specially shaped profile forming the inner and outer sleeve ensures sufficient strength (especially against buckling and compression).

Carrying out works on high reinforced concrete structures, due to their large size, involves presence of construction workers at height. In order to protect the worker from falling from a height, it is necessary to protect him by limiting the available space on which he can move and by providing protection to stop the fall, if, however, he exceeds the edge and falls into a dangerous zone.

Means of protection against falls from a height are divided into collective and individual. Means of individual protection is understood as means worn or held by the worker to protect him from one or more threats. Means of individual protection are used, among others, to arrest, stop and cushion the fall and to establish position during work. When arresting the fall, braking takes place, where the braking force depends on the braking distance. In order to ensure safe working conditions, it is assumed that the impact force must not exceed 6 kN. For this purpose, a suitable harness and a shock-absorbing system connected to an anchorage point are used. Connecting and shock-absorbing means (e.g. in the form of a cord connected to the harness) are attached to an anchorage point located in a suitable place. These points must be selected in such a way as to enable belaying at the workplace and on the way thereto, and be of adequate strength. Common anchorage points are structural elements, e.g. scaffold tubes, thick reinforcement. Load-bearing towers seem to be an excellent structural element to be used as an anchorage point.

Currently, the basic anchorage points are structural points intended to be mounted on walls, ceilings, lintels. They are permanently fixed in the ground, e.g. by means of appropriate anchors. There are also temporary portable anchoring devices which include in particular: (i) strap and cord fasteners (allowing to create an anchorage point on poles, beams and other elements that can be embraced with such a fastener), (ii) transverse beams (stretched between structural elements, e.g. doors), (iii) rescue tripods (used for belaying when working in confined spaces). There are also (iv) devices for anchoring with a horizontal rope, (v) devices for anchoring with a horizontal rail and (vi) inertial anchoring masses intended for use on horizontal surfaces. [Budownictwo. *Dobór środków technicznych zabezpieczaj* 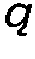 *cych przed upadkiem z wysokości,* Państwowa Inspekcja Pracy, G 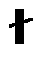 ówny Inspektorat Pracy, Departament prewencji i Promocji, 2012].

The object of the invention is an element of individual protection - a new anchoring device - that allows locating an anchorage point on structural elements with a cross-section similar to a circle (e.g. round or oval). The currently used strap and cord fasteners (allowing an anchorage point to be created on poles, beams and other elements that can be embraced with such a fastener) require extensive experience in installation and time-consuming assembly.

Typically, the belaying point is a rope or a strap suitably wrapped around a structural element, a pole or a tree of adequate strength. The loop can be tightened with the overhand knot. The safety rope is connected to the belaying point by means of a screwed carabiner or two unscrewed carabiners attached with their locks oppositely [K. Buchman: Wspinaczka linkowa. Alpinizm przemystowy. Materiafy instruktazowe, Wroctaw, 2013).

From the international patent application no. WO09118437, an anchoring device is known, for irregularly shaped elements, intended for belaying during works performed at heights. The device according to this solution consists of an elastic, tensile-resistant strap or belt and is provided with a closing element which can be used simultaneously for closing and tightening it at the anchorage point. The device also comprises at least three additional reinforcements equipped with hooks movable along the strap or belt, intended for anchoring the device at the anchorage point.

From the European patent specification no. EP 1452206 B1 an anchoring device is known, used for anchoring on a structural element with an oval cross-section, consisting of two clamps positioned on a common axis and a connecting element designed to enable fastening of a rope connecting the device to an element of protective equipment, wherein both clamps are extended, and at their extensions there are oblong holes directed in opposite directions and connected with a pin. However, the design of this device does not allow it to be used on vertical elements because the connecting element is not resistant to bending and in the event of the fall of the belayed person from a height it is at risk of breaking.

In turn, from the Korean patent specification no. KR 101958332 B1, a device for belaying people working at height is known, consisting of two half-hoops connected in such a way that allows them to be closed and opened, and a clamp-closing/opening element connected to them in the form of a handle provided with closure lock. This handle allows the user to easily open and close the device by squeezing the handle and also allows the locking of the clamps to be released by means of cords attached to the closing element. However, this device is only suitable for securing the belayed person in the event of a fall. This device is not intended to stop a falling person (they will not stop in a specific position on a vertical element of the structure).

The object of the invention is to develop a new anchoring device, small in size and at the same time with a structure resistant to breaking, tearing or abrasion, easy to build and operate, for universal use, especially for belaying workers working at height, preferably fastened around the seat post constituting an element of the load-bearing tower.

The essence of the invention is an anchoring device with a shape similar to a circle, comprising a handle and an articulated assembly of a body and a movable jaw provided with teeth, the body being provided with a lock consisting of two interconnected shaped pieces and two tension members hingedly connected to the shaped pieces and to the body by means of a bolt, the tension members being ended with a lock pin.

Preferably, the movable jaw is provided with an arched guard for teeth which preferably constitutes one piece with the movable jaw.

Preferably, the body is provided with a hook which is articulated with the body, and the shaped piece located on the hook side is provided with a tab.

Preferably, the lock pin is provided with a movable, preferably spring-loaded, latch.

Preferably, the tension members of the lock are connected to each other by means of an upper plate. Preferably, the articulation bolt is a pin.

Preferably, the handle has the shape of a ring.

Preferably, round-shaped anti-slip pads are fitted around the body and the movable jaw.

Solutions according to the invention, in an embodiment, are shown in the attached drawing, where:

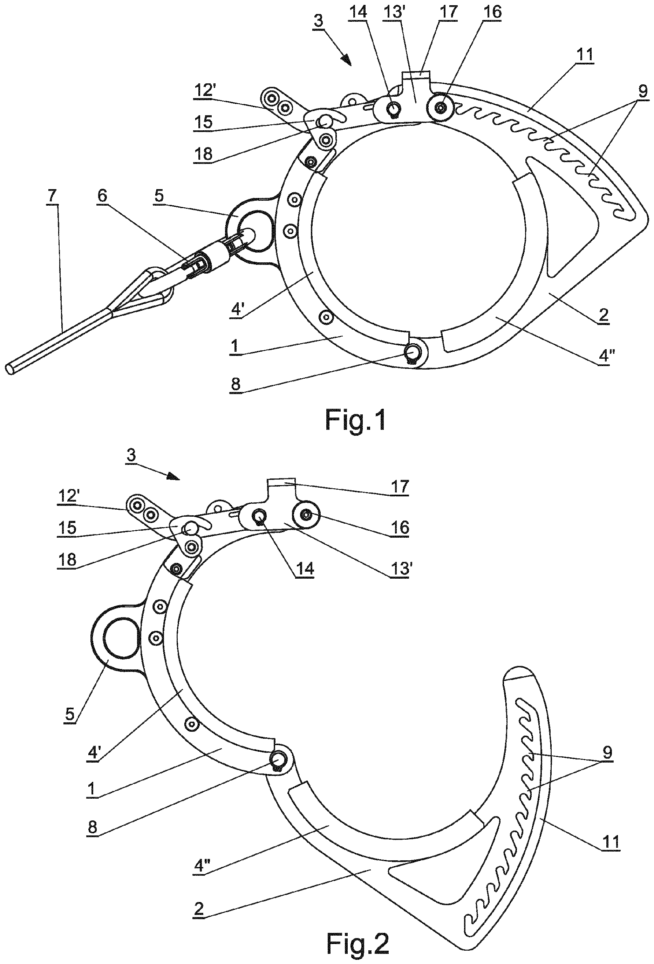

- Fig. 1: shows the device in its first embodiment, in a side view, provided with a carabiner and a shock-absorbing cord;
- Fig. 2: shows the device in its first embodiment in its open position in a side view;

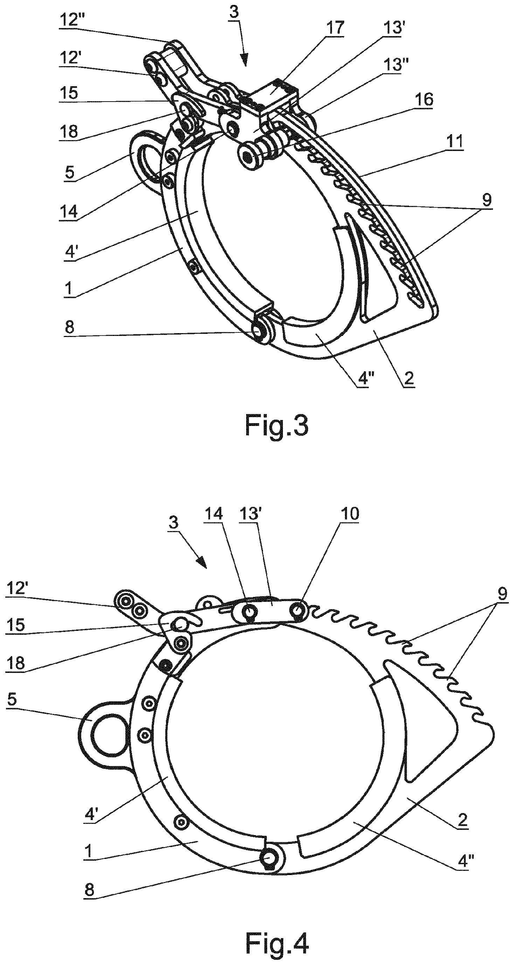

- Fig. 3: shows the device in its first embodiment in its closed position in a perspective view;
- Fig. 4: shows the device in its second embodiment in a side view;

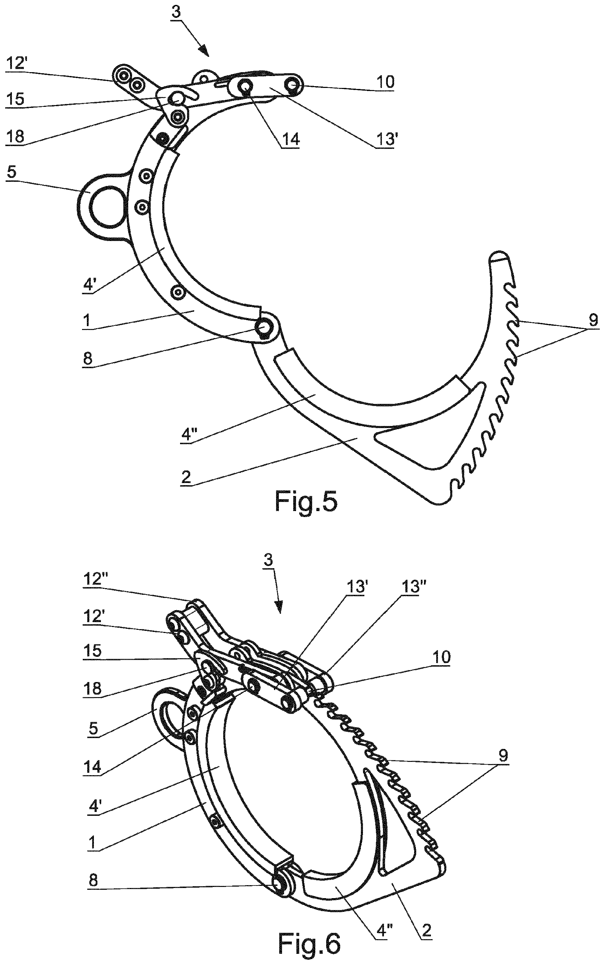

- Fig. 5: shows the device in its second embodiment in its open position in a side view;
- Fig. 6: shows the device in its second embodiment in its closed position in a perspective view;

An anchoring device according to the invention and as shown in the attached drawing comprises a body **1,** a movable jaw **2,** a lock **3,** anti-slip pads **4', 4".** The half-hoop-shaped body **1** is preferably provided with a permanently attached ear-shaped handle **5** for engaging a connector **6,** preferably a steel carabiner, which connects the anchoring device to the unshown harness of the user via a shock-absorbing cord **7.** The body **1** is equipped with a lock **3** in the form of an eccentric latch. The body **1** is articulated to one of the ends of the movable jaw **2,** also in the shape of a half-hoop. The body **1** and the movable jaw **2** connected together form a clamp having an almost circular shape. Preferably, the articulation bolt can be a pin **8.** The movable jaw **2** is provided with inclined teeth **9** for anchoring it in the lock **3** by means of a lock pin **10.** The movable jaw **2** may additionally be provided with an arched guard **11** for teeth, preferably forming one piece with the movable jaw. The blockade **3** is composed of two interconnected shaped pieces **12', 12"** and two tension members **13', 13"** hingedly connected to the shaped pieces **12', 12"** and to the body **1** by means of a bolt **14.** The shaped pieces **12', 12"** can be locked in the body **1** by means of a hook **15** pivotally connected to the body **1.** The tension members **13', 13"** are ended with the lock pin **10** intended for latching the lock **3** between the teeth **9** of the movable jaw **2.** The locking pin **10** may be provided with a spring-loaded latch **16.** The lock tension members **13', 13"** can be additionally connected to each other by means of an upper plate **17** arranged thereon. Around the body **1** and the movable jaw **2,** round-shaped anti-slip pads **4**', **4**" are fitted.

To place the anchoring device according to the invention around a structural element, preferably around the seat post of a load-bearing tower, a tree, a pipe or a pole, its movable jaw **2** should be opened. To be able to do this, however, it is necessary to release the lock **3** by releasing the hook and pulling back the lock, possibly by releasing the hook and the spring-loaded latch. One should proceed likewise to remove the anchoring device from the seat post of the load-bearing tower. The inclination of the teeth **13** of the lock **3** ensures that it is held securely, even when a tensile force acts on the device. The anchoring device is closed by placing the lock pin between the teeth of the movable jaw and engaging the lock and placing the hook.

The movable jaw **2** is preferably provided with a dozen or so teeth **9** in order to allow adaptation of the anchoring device to structural elements of various diameters.

The operation of the device according to the invention is based on the use of the leverage principle and the friction effect between the device, in particular the anti-slip pads **4', 4",** and the element around which it is placed. It is recommended to make anti-slip pads **4', 4"** of a soft material (e.g. rubber or silicone) to maximally multiply the contact surface of both elements.

For structural elements having smaller diameters, when the last possible tooth **12** is not used when closing the movable jaw **2,** some circumferential gap is created. This phenomenon is very desirable from the point of view of the operation of the device. Thanks to such a gap, under the influence of a force applied to the handle **5,** caused e.g. by the weight of the rope or the weight of the falling man, the device will rotate, and such an inclination will multiply the normal force which is the main component in the creation of friction forces and in the lever operation.

Due to the wide functionality of the device according to the invention, it can be used not only as an anchoring element placed on vertical elements of the structure, but also as a traditional belaying hook placed on horizontal or diagonal elements of various profiles.

## Claims

1. An anchoring device with a shape similar to a circle, **characterised in that** it comprises a handle (5) and an articulated assembly of a body (1) and a movable jaw (2) provided with teeth (9), the body (1) being provided with a lock (3) consisting of two interconnected shaped pieces (12', 12") and two tension members (13', 13") hingedly connected to the shaped pieces (12', 12") and to the body (1) by means of a bolt (14), the tension members (13', 13") being ended with a lock pin (10).

2. The device according to claim 1, **characterised in that** the movable jaw (2) is provided with an arched guard (11) for teeth which preferably constitutes one piece with the movable jaw.

3. The device according to claim 1 or 2, **characterised in that** the body (1) is provided with a hook (15) which is articulated with the body (1), and the shaped piece (12') located on the hook (15) side is provided with a tab (18).

4. The device according to claim 1, 2 or 3, **characterised in that** the lock pin (10) is provided with a movable, preferably spring-loaded, latch (16).

5. The device according to any one of the preceding claims, **characterised in that** the lock tension members (13', 13") are connected to each other by an upper plate (17).

6. The device according to any one of the preceding claims, **characterised in that** the articulation bolt is a pin (8).

7. The device according to any one of the preceding claims, **characterised in that** the handle (5) has the shape of a ring.

8. The device according to any one of the preceding claims, **characterised in that** round-shaped anti-slip pads (4', 4") are fitted around the body (1) and the movable jaw (2).
